(19) Europäisches Patentamt / European Patent Office / Office européen des brevets

(11) **EP 4 484 390 A1**

(12) **EUROPEAN PATENT APPLICATION**

(43) Date of publication:
**01.01.2025 Bulletin 2025/01**

(21) Application number: **24183375.5**

(22) Date of filing: **20.06.2024**

(51) International Patent Classification (IPC):
**C03C 3/085** $^{(2006.01)}$   **C03C 15/02** $^{(2006.01)}$
**C03C 21/00** $^{(2006.01)}$

(52) Cooperative Patent Classification (CPC):
**C03C 3/085; C03C 15/02; C03C 21/002**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 KR 20230084907**

(71) Applicants:
• **Samsung Display Co., Ltd.**
  **Yongin-si, Gyeonggi-do 17113 (KR)**
• **Nippon Electric Glass Co., Ltd.**
  **Otsu-shi, Shiga 520-8639 (JP)**

(72) Inventors:
• **KIM, Seung Ho**
  **17113 Giheung-gu, Yongin-si (KR)**
• **NAGANO, Yuta**
  **Otsu, Shiga, 520-8639 (JP)**
• **MURATA, Takashi**
  **Otsu, Shiga, 520-8639 (JP)**

• **SHIMIZU, Yusuke**
  **Otsu, Shiga, 520-8639 (JP)**
• **YUKI, Ken**
  **Otsu, Shiga, 520-8639 (JP)**
• **KAWAMOTO, Kosuke**
  **Otsu, Shiga, 520-8639 (JP)**
• **KIM, Seung**
  **17113 Giheung-gu, Yongin-si (KR)**
• **PARK, Cheol Min**
  **17113 Giheung-gu, Yongin-si (KR)**
• **SHON, Hui Yeon**
  **17113 Giheung-gu, Yongin-si (KR)**
• **SHIM, Gyu In**
  **17113 Giheung-gu, Yongin-si (KR)**
• **LEE, Jae Gil**
  **17113 Giheung-gu, Yongin-si (KR)**
• **JANG, Jin Won**
  **17113 Giheung-gu, Yongin-si (KR)**
• **JUNG, So Mi**
  **17113 Giheung-gu, Yongin-si (KR)**

(74) Representative: **Dr. Weitzel & Partner**
  **Patent- und Rechtsanwälte mbB**
  **Friedenstrasse 10**
  **89522 Heidenheim (DE)**

(54) **GLASS COMPOSITION, GLASS ARTICLE MADE FROM THE GLASS COMPOSITION, A METHOD OF MANUFACTURING A GLASS ARTICLE, AND DISPLAY DEVICE**

(57) A glass article includes a glass composition including mole percent (mol%) to 70 mol% of $SiO_2$, 5 mol% to 15 mol% of $Al_2O_3$, 5 mol% to 15 mol% of $Na_2O$, greater than 0 mol% and equal to or less than 5 mol% of $K_2O$, 5 mol% to 15 mol% of $Li_2O$, and greater than 0 mol% and equal to or less than 5 mol% of MgO, and satisfying Relation (1) below:

$$0.1 \leq Al_2O_3/(\text{sum of } Na_2O,\ K_2O,\text{ and } Li_2O) \leq 0.7 \dots\ (1),$$

where $Al_2O_3$, $Na_2O$, $K_2O$, and $Li_2O$ in the Relation (1) denote contents (mol%) of $Al_2O_3$, $Na_2O$, $K_2O$, and $Li_2O$, respectively, in the glass composition, and the glass article has a thickness of 100 micrometers ($\mu$m) or less.

Processed by Luminess, 75001 PARIS (FR)

**Description**

BACKGROUND

1 Field

The present invention relates to a glass composition, a glass article made from the glass composition, a method of manufacturing of a glass article, and a display device.

2. Description of the Related Art

Glass articles are widely used in electronic devices including display devices, building materials, and the like. For example, a glass article is applied to a substrate of a flat panel display device, such as a liquid crystal display ("LCD"), an organic light-emitting display device ("OLED") or an electrophoretic display device, or to a cover window for protecting the display device.

As portable electronic devices such as smart phones and tablet personal computers ("PCs") increase, glass articles applied to the portable electronic devices are frequently exposed to external impacts. Therefore, it is required to develop a glass article that is thin for portability and may withstand external impacts.

Recently, display devices that may be folded for user convenience are researched. A desired glass article applied to a foldable display device may have a thin thickness to relieve bending stress when folded and at the same time may have sufficient strength to withstand external impacts. Accordingly, attempts are made to improve the strength of a thin glass article by changing the component ratio of a composition of the glass article and the conditions of a manufacturing process.

SUMMARY

The present invention provides a glass composition having a novel composition ratio, a glass article made from the glass composition, a method of manufacturing of a glass article, and a display device including the glass article.

The present invention is defined by the features of independent claim 1. The dependent claims describe preferred embodiments. The above and other features of the disclosure will become more apparent to one of ordinary skill in the art to which the invention pertains by referencing the detailed description of the invention given below.

In an embodiment of the invention, a glass article includes a glass composition including 60 mole percent (mol%) to 70 mol% of $SiO_2$, 5 mol% to 15 mol% of $Al_2O_3$, 5 to 15 mol% of $Na_2O$, greater than 0 mol% and equal to or less than 5 mol% of $K_2O$, 5 to 15 mol% of $Li_2O$, and greater than 0 mol% and equal to or less than 5 mol% of MgO, and satisfying Relation (1) below:

$$0.1 \leq Al_2O_3/(\text{sum of } Na_2O, K_2O, \text{ and } Li_2O) \leq 0.7..... \quad (1)$$

where $Al_2O_3$, $Na_2O$, $K_2O$, and $Li_2O$ in the Relation (1) denote contents (mol%) of Al2O3, Na2O, K2O, and Li2O, respectively, in the glass composition, and the glass article has a thickness of 100 micrometers ($\mu$m) or less.

In an embodiment, a thickness of the glass article may be in a range of 20 $\mu$m to 100 $\mu$m.

In an embodiment, a thermal expansion coefficient of the glass article may be in a range of $90*10^{-7}$ per kelvin ($K^{-1}$) to $100*10^{-7}$ $K^{-1}$.

In an embodiment, a glass transition temperature of the glass article may be in a range of 425 degrees Celsius (°C) to 525 °C.

In an embodiment, a density of the glass article may be in a range of 2.38 grams per cubic centimeter ($g/cm^3$) to 2.48 $g/cm^3$.

In an embodiment, an elastic modulus of the glass article may be in a range of 72 gigapascals (GPa) to 82 GPa.

In an embodiment, a Poisson ratio of the glass article may be in a range of 0.20 to 0.22.

In an embodiment, a hardness of the glass article may be in a range of 5.50 GPa to 6.50 GPa.

In an embodiment, a fracture toughness of the glass article may be in a range of 0.75 megapascal square root meter ($MPa*m^{0.5}$) to 0.85 $MPa*m^{0.5}$.

In an embodiment, a brittleness of the glass article may be in a range of 7.0 $\mu m^{-0.5}$ to 8.0 $\mu m^{-0.5}$.

In an embodiment, a surface roughness may be in a range of 0.2 nm to 0.45 nm or in a range of 0.2 nm to 0.4 nm.

In an embodiment, the glass article may be a foldable glass article.

In an embodiment of the invention, a glass composition includes 60 mol% to 70 mol% of $SiO_2$, 5 mol% to 15 mol% of $Al_2O_3$, 5 mol% to 15 mol% of $Na_2O$, greater than 0 mol% and equal to or less than 5 mol% of $K_2O$, 5 mol% to 15 mol% of $Li_2O$, and greater than 0 mol% and equal to or less than 5 mol% of MgO based on a total weight, and satisfies Relation (1) below:

$$0.1 \leq Al_2O_3/(\text{sum of } Na_2O, K_2O, \text{ and } Li_2O) \leq 0.7 ..... (1)$$

where $Al_2O_3$, $Na_2O$, $K_2O$, and $Li_2O$ in the Relation (1) denote contents (mol%) of $Al_2O_3$, $Na_2O$, $K_2O$, and $Li_2O$, respectively, in the glass composition.

In an embodiment of the invention, a display device includes a display panel including a plurality of pixels, a cover window disposed on the display panel, and an optically clear bonding layer disposed between the display panel and the cover window, where the cover window includes a glass composition including 60 mol% to 70 mol% of $SiO_2$, 5 mol% to 15 mol% of $Al_2O_3$, 5 mol% to 15 mol% of $Na_2O$, greater than 0 mol% and equal to or less than 5 mol% of $K_2O$, 5 mol% to 15 mol% of $Li_2O$, and greater than 0 mol% and equal to or less than 5 mol% of MgO, and satisfying Relation (1) below and having a thickness of 100 $\mu$m or less.

$$0.1 \leq Al_2O_3/(\text{sum of } Na_2O, K_2O, \text{ and } Li_2O) \leq 0.7 ..... (1)$$

where $Al_2O_3$, $Na_2O$, $K_2O$, and $Li_2O$ in the Relation (1) denote contents (mol%) of $Al_2O_3$, $Na_2O$, $K_2O$, and $Li_2O$, respectively, in the glass composition, and the cover window has a thickness of 100 $\mu$m or less.

In an embodiment, the cover window may have a thickness of 20 $\mu$m to 100 $\mu$m.

In an embodiment, the cover window may have a thermal expansion coefficient of $90*10^{-7}$ K$^{-1}$ to $100*10^{-7}$ K$^{-1}$.

In an embodiment, the cover window may have a glass transition temperature of 425 °C to 525 °C.

In an embodiment, the cover window may have a density of 2.38 g/cm$^3$ to 2.48 g/cm$^3$.

In an embodiment, the cover window may have an elastic modulus of 72 GPa to 82 GPa.

In an embodiment, the cover window may have a Poisson ratio of 0.20 to 0.22.

In an embodiment, the cover window may have a hardness of 5.50 GPa to 6.50 GPa.

In an embodiment, the cover window may have a fracture toughness of 0.75 MPa*m$^{0.5}$ to 0.85 MPa*m$^{0.5}$.

In an embodiment, the cover window may have a brittleness of 7.0 $\mu$m$^{-0.5}$ to 8.0 $\mu$m$^{-0.5}$.

In an embodiment, the cover window may have a surface roughness of 0.2 nm to 0.45 nm or in a range of 0.2 nm to 0.4 nm.

In an embodiment, the display device may be a foldable display device.

In an embodiment of the invention, a method of manufacturing a glass article includes forming a glass composition into a glass having a plate shape, cutting the glass, first surface treating the glass, tempering the glass, and second surface treating the glass, where the glass composition includes a glass composition including 60 mol% to 70 mol% of $SiO_2$, 5 mol% to 15 mol% of $Al_2O_3$, 5 mol% to 15 mol% of $Na_2O$, greater than 0 mol% and equal to or less than 5 mol% of $K_2O$, 5 mol% to 15 mol% of $Li_2O$, and greater than 0 mol% and equal to or less than 5 mol% of MgO based on a total weight, and satisfying Relation (1) below.

$$0.1 \leq Al_2O_3/(\text{sum of } Na_2O, K_2O, \text{ and } Li_2O) \leq 0.7 ..... (1)$$

where $Al_2O_3$, $Na_2O$, $K_2O$, and $Li_2O$ in the Relation (1) denote contents (mol%) of $Al_2O_3$, $Na_2O$, $K_2O$, and $Li_2O$, respectively, in the glass composition.

In an embodiment, the first surface treating may be to etch the surface of the glass at an etching rate of 1 micrometer per minute ($\mu$m/min) to 1.4 $\mu$m/min.

In an embodiment, the first surface treating may be to etch the surface of the glass by a thickness of 0.8 $\mu$m to 1.2 $\mu$m.

In an embodiment, the second surface treating may be to etch the surface of the glass at an etching rate of 1 $\mu$m/min to 1.4 $\mu$m/min.

In an embodiment, the second surface treating may be to etch the surface of the glass by a thickness of 0.2 $\mu$m to 0.8 $\mu$m.

In an embodiment, a surface roughness may be in a range of 0.2 nm to 0.45 nm or in a range of 0.2 nm to 0.4 nm.

A glass composition in an embodiment may have a novel composition ratio of components, and a glass article made from the glass composition may have excellent mechanical strength, surface strength, and impact resistance properties while having flexibility. In addition, the display device including a glass article described above may have excellent flexibility and strength to the extent that it may be applied to a foldable display device.

However, the effects of the invention are not restricted to the one set forth herein. The above and other effects of the invention will become more apparent to one of daily skill in the art to which the invention pertains by referencing the claims.

BRIEF DESCRIPTION OF THE DRAWINGS

These and/or other features will become apparent and more readily appreciated from the following description of the embodiments, taken in conjunction with the accompanying drawings in which:

FIG. 1 is a perspective view of an embodiment of glass articles;
FIG. 2 is a perspective view illustrating an embodiment of an unfolded state of a display device to which a glass article is applied;
FIG. 3 is a perspective view illustrating a folded state of the display device of FIG. 2;
FIG. 4 is a cross-sectional view illustrating an embodiment in which a glass article is applied as a cover window of a display device;
FIG. 5 is a cross-sectional view of an embodiment of a flat plate-shaped glass article;
FIG. 6 is a graph illustrating an embodiment of a stress profile of the glass article according to the embodiment of FIG. 5;
FIG. 7 is a flowchart illustrating an embodiment of operations in a process of manufacturing a glass article;
FIG. 8 is a schematic diagram illustrating a series of operations from a cutting operation to a second surface treating operation of FIG. 7;
FIG. 9 is a surface image of a glass article manufactured according to Comparative Example 1;
FIG. 10 is a surface image of a glass article manufactured according to Embodiment 1;
FIG. 11 is a surface image of a glass article manufactured according to Embodiment 2;
FIG. 12 is a surface image of a glass article manufactured according to Embodiment 3;
FIG. 13 is a surface image of a glass article manufactured according to Embodiment 4;
FIG. 14 is a surface image of a glass article manufactured according to Embodiment 5;
FIG. 15 is a surface image of a glass article manufactured according to Embodiment 6;
FIG. 16 is a graph showing surface roughness according to etching thickness of glass articles manufactured according to Comparative Example 1 and Embodiment 1, 2, and 3;
FIG. 17 is a graph showing pen drop test result of a glass article according to Experimental Example 3;
FIG. 18 schematically illustrates a pen drop test device; and
FIG. 19 is a graph showing pen drop test result of a glass article according to Comparative Example 2 and Embodiment 7.

DETAILED DESCRIPTION

Embodiments of the invention will now be described more fully hereinafter with reference to the accompanying drawings, in which preferred embodiments of the invention are shown. This invention may, however, be embodied in different forms and should not be construed as limited to the embodiments set forth herein. Rather, these embodiments are provided so that this disclosure will be thorough and complete, and will filly convey the scope of the invention to those skilled in the art.

It will also be understood that when a layer is referred to as being "on" another layer or substrate, it can be directly on the other layer or substrate, or intervening layers may also be present. The same reference numbers indicate the same components throughout the specification.

It will be understood that, although the terms "first," "second," etc. may be used herein to describe various elements, these elements should not be limited by these terms. These terms are only used to distinguish one element from another element. For instance, a first element discussed below could be termed a second element without departing from the teachings of the present invention. Similarly, the second element could also be termed the first element.

Each of the features of the various embodiments of the invention may be combined or combined with each other, in part or in whole, and technically various interlocking and driving are possible. Each embodiment may be implemented independently of each other or may be implemented together in an association.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). The term "about" can mean within one or more standard deviations, or within $\pm$ 30%, 20%, 10%, 5% of the stated value, for example.

Hereinafter, embodiments will be described with reference to the accompanying drawings.

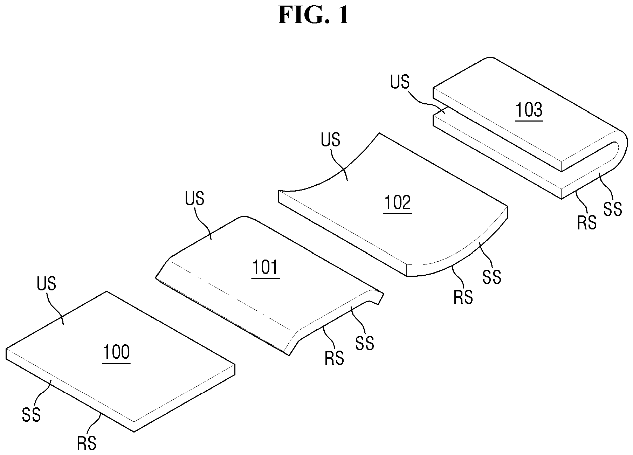

FIG. 1 is a perspective view of an embodiment of glass articles.

Glass is used as a cover window for protecting a display, a substrate for a display panel, a substrate for a touch panel, an optical member such as a light guide plate, etc. in electronic devices including displays such as tablet personal computers ("PCs"), notebook PCs, smartphones, electronic books, televisions and PC monitors as well as refrigerators and washing machines including display screens. The glass may also be used for cover glass of vehicle dashboards, cover glass of solar cells, building interior materials, and windows of buildings or houses.

Glass is desired to have great strength. In an embodiment, glass for windows is desired to be thin to have relatively high transmittance and light weight but desired to be strong enough not to be easily broken by an external impact, for example. Glass with increased strength may be produced using a method such as chemical tempering or thermal tempering. In embodiments, tempered glass having various shapes are illustrated in FIG. 1.

Referring to FIG. 1, in an embodiment, a glass article 100 may be in the shape of a flat sheet or a flat plate. In other embodiments, glass articles 101 through 103 may have a three-dimensional ("3D") shape including a bent portion. In an embodiment, a glass article may have edges of a flat portion bent (refer to '101'), may be generally curved (refer to '102'), or may be folded (refer to '103'), for example. In an alternative embodiment, the glass article 100 may be shaped like a flat sheet or a flat plate but may have flexibility so that it may be a foldable glass article that may be folded or bent. In addition, the glass article 100 may be stretched or rolled.

The glass articles 100 through 103 may have a rectangular planar shape. However, the glass articles 100 through 103 are not limited to the rectangular planar shape and may also have various planar shapes such as a rectangle with rounded corners, a square, a circle, and an oval. In the following embodiments, a flat plate having a rectangular planar shape will be described in an embodiment of the glass articles 100 through 103. However, it is clear that the invention is not limited thereto. In an embodiment, the glass articles 100 through 103 may each include a first surface US, a second surface RS, and side surfaces SS.

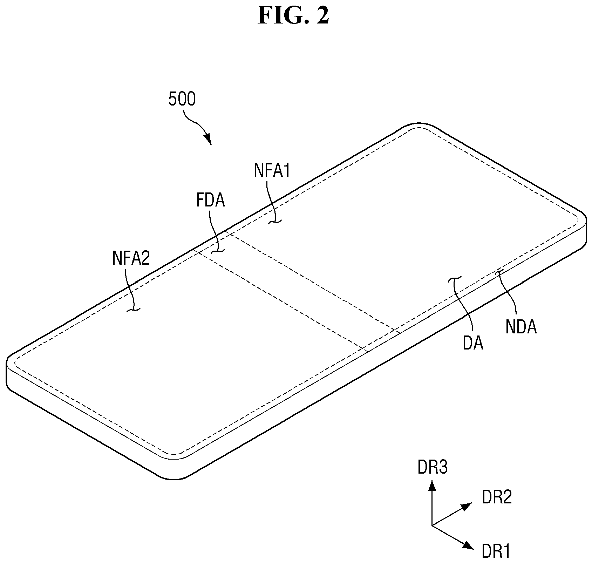

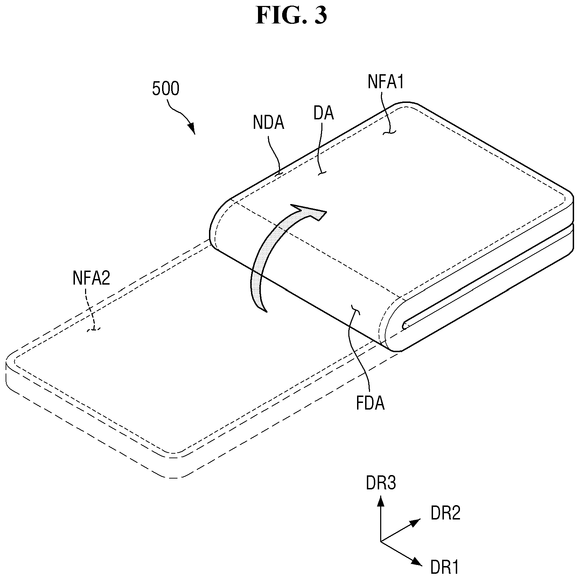

FIG. 2 is a perspective view illustrating an embodiment of an unfolded state of a display device to which a glass article is applied. FIG. 3 is a perspective view illustrating a folded state of the display device of FIG. 2.

Referring to FIGS. 2 and 3, a display device 500 in the embodiment may be a foldable display device. As will be described later, the glass article 100 of FIG. 1 may be applied to the display device 500 as a cover window. The glass article 100 may have flexibility so that it may be folded.

In FIGS. 2 and 3, a first direction DR1 may be a direction parallel to a side of the display device 500 in a plan view, e.g., a horizontal direction of the display device 500. A second direction DR2 may be a direction parallel to another side of the display device 500 in contact with the above side in a plan view, e.g., a vertical direction of the display device 500. A third direction DR3 may be a thickness direction of the display device 500.

In an embodiment, the display device 500 may be quadrangular, e.g., rectangular in a plan view. The display device 500 may be shaped like a rectangle with perpendicular corners or a rectangle with rounded corners in a plan view. The display device 500 may include two short sides disposed in the first direction DR1 and two long sides disposed in the second direction DR2 in a plan view.

The display device 500 includes a display area DA and a non-display area NDA. The shape of the display area DA may correspond to the shape of the display device 500 in a plan view. In an embodiment, when the display device 500 is quadrangular, e.g., rectangular in a plan view, the display area DA may also be quadrangular, e.g., rectangular, for example.

The display area DA may include a plurality of pixels to display an image. The pixels may be arranged in a matrix direction. However, the invention is not limited thereto, and the pixels may be arranged in various other directions. Each of the pixels may be shaped like a rectangle, a rhombus, or a square in a plan view. However, the invention is not limited thereto. In an embodiment, each of the pixels may also be shaped like a quadrilateral other than a rectangle, a rhombus or a square, a circle, or an oval in a plan view, for example.

The non-display area NDA may not display an image because it does not include pixels. The non-display area NDA may be disposed around the display area DA. The non-display area NDA may surround the display area DA. However, the invention is not limited thereto. The display area DA may also be partially surrounded by the non-display area NDA.

In an embodiment, the display device 500 may maintain both the folded state and the unfolded state. The display device 500 may be folded in an in-folding manner in which the display area DA is disposed inside as illustrated in FIG. 3. When the display device 500 is folded in the in-folding manner, portions of an upper surface of the display device 500 may face each other. In an alternative embodiment, the display device 500 may be folded in an out-folding manner in which the display area DA is disposed outside. When the display device 500 is folded in the out-folding manner, portions of a lower surface of the display device 500 may face each other.

In an embodiment, the display device 500 may be a foldable device. In the specification, the term "foldable device" is used to refer to devices that may be folded, including not only a folded device but also a device that may have both the folded state and the unfolded state. In addition, folding typically includes folding at an angle of about 180 degrees. However, the invention is not limited thereto, and folding at an angle of more than or less than 180 degrees, such as folding at an angle of 90 to less than 180 degrees or an angle of 120 to less than 180 degrees may also be understood as folding. Furthermore, even an incompletely folded state may also be also referred to as the folded state when it is not the unfolded state. In an embodiment, even a folded state at an angle of 90 degrees or less may be expressed as the folded state to distinguish it from the unfolded state as long as a maximum folding angle is 90 degrees or more, for example. The radius of curvature at the time of folding may be 5 millimeters (mm) or less, preferably, 1 mm to 2 mm or about 1.5 mm. However, the invention is not limited thereto.

In an embodiment, the display device 500 may include a folding area FDA, a first non-folding area NFA1, and a second non-folding area NFA2. The folding area FDA may be an area in which the display device 500 is folded, and the first non-folding area NFA1 and the second non-folding area NFA2 may be areas in which the display device 500 is not folded.

The first non-folding area NFA1 may be disposed on a side, e.g., an upper side of the folding area FDA. The second non-folding area NFA2 may be disposed on the other side, e.g., a lower side of the folding area FDA. The folding area FDA may be an area bent with a predetermined curvature.

In an embodiment, the folding area FDA of the display device 500 may be set at a predetermined position. In the display device 500, one folding area FDA or two or more folding areas FDA may be set at a predetermined position. In an embodiment, the folding area FDA may not be limited to a predetermined position in the display device 500 but may be freely set in various areas.

In an embodiment, the display device 500 may be folded in the second direction DR2. As a result, a length of the display device 500 in the second direction DR2 may be reduced to about half. Therefore, a user may easily carry the display device 500.

In an embodiment, the direction in which the display device 500 is folded is not limited to the second direction DR2. In an embodiment, the display device 500 may also be folded in the first direction DR1, for example. In this case, the length of the display device 500 in the first direction DR1 may be reduced to about half.

In the drawings, each of the display area DA and the non-display area NDA overlaps the folding area FDA, the first non-folding area NFA1, and the second non-folding area NFA2. However, the invention is not limited thereto. In an embodiment, each of the display area DA and the non-display area NDA may overlap at least one of the folding area FDA, the first non-folding area NFA1, and the second non-folding area NFA2, for example.

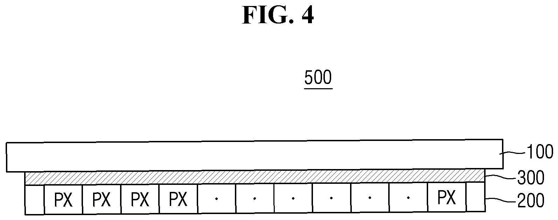

FIG. 4 is a cross-sectional view illustrating an embodiment in which a glass article is applied as a cover window of a display device.

Referring to FIG. 4, the display device 500 may include a display panel 200, the glass article 100 disposed on the display panel 200 and serving as a cover window, and an optically clear bonding layer 300 disposed between the display panel 200 and the glass article 100 to bond the display panel 200 and the glass article 100 together.

The display panel 200 may be, e.g., a self-luminous display panel such as an organic light-emitting display panel ("OLED"), an inorganic electroluminescent ("EL") display panel, a quantum dot light-emitting display panel ("QED"), a micro-light-emitting diode ("LED") display panel, a nano-LED display panel, a plasma display panel ("PDP"), a field emission display panel ("FED") or a cathode ray tube ("CRT") display panel or may be a light-receiving display panel such as a liquid crystal display ("LCD") panel or an electrophoretic display ("EPD") panel.

The display panel 200 may include a plurality of pixels PX and may display an image using light emitted from each pixel PX. The display device 500 may further include a touch member (not illustrated). In an embodiment, the touch member may be internalized in the display panel 200. In an embodiment, the touch member may be directly formed on a display member of the display panel 200 so that the display panel 200 itself may perform a touch function, for example. In an embodiment, the touch member may be manufactured separately from the display panel 200 and then attached to an upper surface of the display panel 200 by an optically clear bonding layer.

The glass article 100 is disposed on the display panel 200 to protect the display panel 200. The glass article 100 may be larger in size than the display panel 200. Thus, side surfaces of the glass article 100 may protrude outward from side surfaces of the display panel 200, but the invention is not limited to this case. The display device 500 may further include a printed layer (not illustrated) disposed on at least one surface of the glass article 100 in an edge portion of the glass article 100. The printed layer may prevent a bezel area of the display device 500 from being visible from the outside and, in some cases, may perform a decorative function.

The optically clear bonding layer 300 is disposed between the display panel 200 and the glass article 100. The optically clear bonding layer 300 fixes the glass article 100 on the display panel 200. The optically clear bonding layer 300 may include an optical clear adhesive ("OCA") or an optical clear resin ("OCR").

The tempered glass article 100 described above will now be described in more detail.

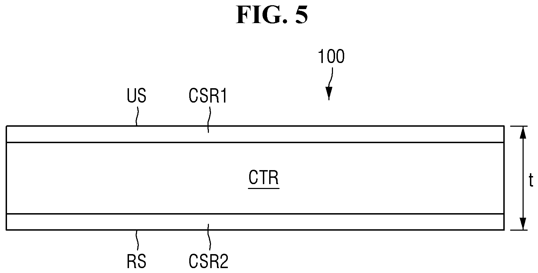

FIG. 5 is a cross-sectional view of a flat plate-shaped glass article.

Referring to FIG. 5, the glass article 100 may include a first surface US, a second surface RS, and side surfaces SS (refer to FIG. 1). The first surface US and the second surface RS of the flat plate-shaped glass article 100 are main surfaces having a relatively large area, and the side surfaces are outer surfaces connecting the first surface US and the second surface RS.

The first surface US and the second surface RS face each other in the thickness direction. When the glass article 100 serves to transmit light like a cover window of a display, the light may usually be incident on any one of the first surface US and the second surface RS and then transmitted to the other surface.

A thickness t of the glass article 100 is defined as a distance between the first surface US and the second surface RS. The thickness t of the glass article 100 may be in the range of, but not limited to, 100 $\mu$m or less, preferably be in the

range of 20 μm to 100 μm. In an embodiment, the thickness t of the glass article 100 may be 80 μm or less. In another embodiment, the thickness t of the glass article 100 may be about 75 μm or less. In another embodiment, the thickness t of the glass article 100 may be about 70 μm or less. In another embodiment, the thickness t of the glass article 100 may be about 60 μm or less. In another embodiment, the thickness t of the glass article 100 may be about 65 μm or less. In another embodiment, the thickness t of the glass article 100 may be about 50 μm or less. In another embodiment, the thickness t of the glass article 100 may be about 30 μm or less. In embodiments, the thickness t of the glass article 100 may be in the range of 20 μm to 50 μm or may have a value of about 30 μm. The glass article 100 may have a uniform thickness t. However, the invention is not limited thereto, and the glass article 100 may also have a different thickness t in each region.

The glass article 100 may be tempered to have a predetermined stress profile therein. The glass article 100 after being tempered better prevents crack generation, crack propagation, and breakage due to an external impact than the glass article 100 before being tempered. The glass article 100 tempered through a tempering process may have various stresses in different regions. In an embodiment, compressive regions CSR1 and CSR2 in which compressive stress acts may be disposed near the surfaces of the glass article 100, that is, near the first surface US and the second surface RS, and a tensile region CTR in which tensile stress acts may be disposed inside the glass article 100, for example. The stress values of the boundaries DOC1 and DOC2 between the compressive regions CSR1 and CSR2 and the tensile region CTR may be zero. The compressive stress in one compressive region CSR1 or CSR2 may have a different stress value according to position (i.e., depth from the surface). In addition, the tensile region CTR may have a different stress value according to depth from the surface US or RS. In an embodiment, the first compressive region CSR1 and the second compressive region CSR2 may respectively include a first transition point TP1 and a second transition point TP2 at which the slope of the stress profile changes abruptly.

In the glass article 100, the location of the compressive regions CSR1 and CSR2, the stress profile within the compressive regions CSR1 and CSR2, the compressive energy of the compressive regions CSR1 and CSR2, or the tensile energy of the tensile region CTR or the like may have a significant impact on the mechanical properties of the glass article 100, such as surface strength.

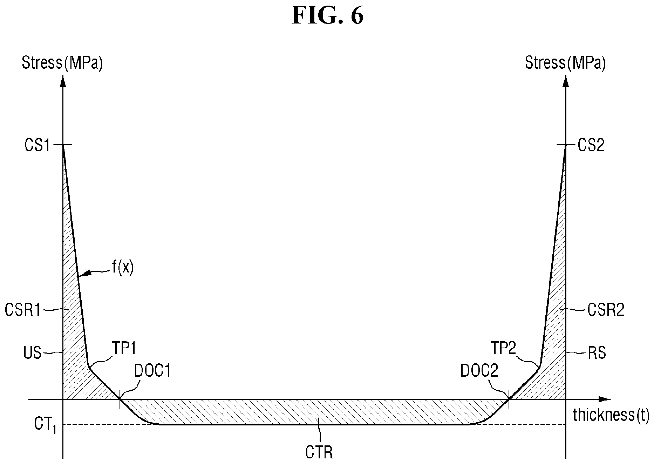

FIG. 6 is a graph illustrating an embodiment of a stress profile of the glass article according to the embodiment of FIG. 5. In the graph of FIG. 6, an x-axis represents the thickness direction of the glass article. In FIG. 6, compressive stress is represented by a positive value, and tensile stress is represented by a negative value. In the specification, the magnitude of the compressive/tensile stress denotes the magnitude of an absolute value regardless of the sign of the value.

Referring to FIG. 6, the glass article 100 includes a first compressive region CSR1 extending (or expanding) from the first surface US to a first compression depth DOC1 and a second compressive region CSR2 extending (or expanding) from the second surface RS to a second compression depth DOC2. The tensile region CTR is disposed between the first compression depth DOC1 and the second compression depth DOC2. In the overall stress profile of the glass article 100, regions on both surface sides US and RS may be symmetrical to each other with respect to a center of the thickness t direction. Although not illustrated in FIG. 6, compressive regions and a tensile region may also be disposed between facing side surfaces of the glass article 100 in a similar manner.

The first compressive region CSR1 and the second compressive region CSR2 resist external impacts to prevent generation of cracks in the glass article 100 or breakage of the glass article 100. The greater the maximum compressive stresses CS1 and CS2 of the first and second compressive regions CSR1 and CSR2, the greater the strength of the glass article 100. Since an external impact is usually transmitted through the surfaces of the glass article 100, it is advantageous in terms of durability to have the maximum compressive stresses CS1 and CS2 at the surfaces of the glass article 100. In this regard, the compressive stresses of the first compressive region CSR1 and the second compressive region CSR2 tend to be greatest at the surfaces and decrease toward the inside of the glass article 100.

The first compression depth DOC1 and the second compression depth DOC2 prevent cracks or grooves defined in the first and second surfaces US and RS from propagating to the tensile region CTR inside the glass article 100. The greater the first and second compression depths DOC1 and DOC2, the better the propagation of cracks may be prevented. Points corresponding to the first compression depth DOC1 and the second compression depth DOC2 correspond to the boundaries between the compressive regions CSR1 and CSR2 and the tensile region CTR and have a stress value of 0.

Throughout the glass article 100, the tensile stress of the tensile region CTR may be balanced with the compressive stresses of the compressive regions CSR1 and CSR2. That is, the total compressive stress (i.e., compressive energy) in the glass article 100 may be equal to the total tensile stress (i.e., tensile energy). The stress energy accumulated in one region having a predetermined width in the thickness t direction in the glass article 100 may be calculated by integrating a stress profile. When the stress profile in the glass article 100 having a thickness of t is represented by a function f(x), the following equation may be established.

$$\int_0^t f(x)\,dx = 0 \qquad \text{.......(1)}$$

As the magnitude of the tensile stress inside the glass article 100 increases, fragments may be violently expelled when the glass article 100 is broken, and crushing may occur from inside the glass article 100. The maximum tensile stress that meets the fragility criteria of the glass article 100 may satisfy, but not limited to, the following relation.

$$CT_1 \leq -38.7 \times \ln(t) + 48.2 \quad \text{.........(2)}.$$

In some embodiments, a maximum tensile stress $CT_1$ may be 100 megapascals (Mpa) or less or may be 85 MPa or less. A maximum tensile stress $CT_1$ of 75 MPa or more may improve mechanical properties such as strength. In an embodiment, the maximum tensile stress $CT_1$ may be, but is not limited to, 75 MPa to 85 MPa.

The maximum tensile stress $CT_1$ of the glass article 100 may be generally disposed in a central portion of the glass article 100 in the thickness t direction. In an embodiment, the maximum tensile stress $CT_1$ of the glass article 100 may be disposed at a depth of 0.4 t to 0.6 t, at a depth of 0.45 t to 0.55 t, or at a depth of about 0.5 t, for example.

Large compressive stress and compressive depths DOC1 and DOC2 may be advantageous in increasing the strength of the glass article 100. However, as the compressive energy increases, the tensile energy may also increase, thereby increasing the maximum tensile stress $CT_1$. In order for the glass article 100 to meet the fragility criteria while having relatively high strength, the stress profile may be adjusted to increase the maximum compressive stresses CS1 and CS2 and the compressive depths DOC1 and DOC2 and reduce the compressive energy. To this end, the glass article 100 may be manufactured using a glass composition including predetermined components in a predetermined ratio. Depending on the composition ratio of the components included in the glass composition, the manufactured glass article 100 may have excellent strength and, at the same time, may have flexible nature and physical properties that make it applicable to a foldable display device.

In an embodiment, the glass composition that forms the glass article 100 may include 60 mole percent (mol%) to 70 mol% of $SiO_2$, 5 mol% to 15 mol% of $Al_2O_3$, 5 mol% to 15 mol% of $Na_2O$, greater than 0 mol% to 5 mol% of $K_2O$, 5 mol% to 15 mol% of $Li_2O$, and greater than 0 mol% to 5 mol% of MgO based on the total weight of the glass composition.

Each component of the glass composition will be described in more detail as follows.

$SiO_2$ may serve to form the framework of glass, increase chemical durability, and reduce generation of cracks when scratches (indentations) are formed on the glass surface. $SiO_2$ may be a network former oxide that forms a network of glass, and the glass article 100 manufactured to include $SiO_2$ may have a reduced coefficient of thermal expansion and improved mechanical strength. To fully perform the above roles, $SiO_2$ may be included in an amount of 60 mol% or more. To exhibit sufficient meltability, $SiO_2$ may be included in the glass composition in an amount of 70 mol% or less.

$Al_2O_3$ serves to improve crushability of glass. That is, $Al_2O_3$ may cause glass to be fragmented into a smaller number of pieces when the glass is broken. $Al_2O_3$ may be an intermediate oxide that forms a bond with $SiO_2$ forming a network structure. In addition, $Al_2O_3$ may act as an active component that improves ion exchange performance during chemical tempering and increases surface compressive stress after the tempering. When included in an amount of 5 mol% or more, $Al_2O_3$ may effectively perform the above functions. To maintain acid resistance and meltability of glass, $Al_2O_3$ may be included in an amount of 15 mol% or less.

$Na_2O$ serves to form surface compressive stress through ion exchange and improve meltability of glass. $Na_2O$ may form non-bridging oxygen in a $SiO_2$ network structure by forming an ionic bond with oxygen of $SiO_2$ that forms the network structure. An increase in non-bridging oxygen may improve the flexibility of the network structure and cause the glass article 100 to have physical properties that make it applicable to a foldable display device. $Na_2O$ may effectively perform the above roles when included in an amount of 5 mol% or more. However, 15 mol% or less may be desirable in view of acid resistance of the glass article 100.

$K_2O$ may replace Na with K to increase a compressive stress of the glass. Accordingly, $K_2O$ may contribute to realizing the flexible glass article 100 by improving folding reliability and the bending reliability of the glass article. $K_2O$ may meaningfully perform the function as described above when a content thereof is greater than 0 mol%. However, in terms of meltability of the glass article 100, it may be preferable that the content of $K_2O$ is 5 mol% or less.

$Li_2O$ serves to form a surface compressive stress by ion exchange and improve meltability of the glass, similar to $Na_2O$ described above. $Li_2O$ may form non-bridging oxygen in the $SiO_2$ network structure by forming an ionic bond with oxygen of $SiO_2$ forming the network structure. An increase in the non-bridging oxygen may improve flexibility and a shock absorption function of the network structure, and the glass article 100 may have physical properties that it is applicable to the foldable display device. It is preferable in effectively performing the role as described above that a content of $Li_2O$ is 5 mol% or more. However, in terms of heat resistance of the glass article 100, it may be preferable that the content of $Li_2O$ is 15 mol% or less.

MgO may improve a surface strength of glass and reduce a formation temperature of the glass. MgO may be a network modifier oxide modifying the $SiO_2$ network structure forming a network structure. MgO may decrease a refractive index of the glass and adjust a coefficient of thermal expansion and an elastic coefficient of the glass. MgO may meaningfully perform the function as described above when a content thereof is greater than 0 mol%. However, in terms of meltability of the glass article 100, it may be preferable that the content of MgO is 5 mol% or less.

In an embodiment, the glass composition may satisfy Relation (1) below.

$$0.1 \leq Al_2O_3/(\text{sum of } Na_2O, K_2O, \text{ and } Li_2O) \leq 0.7.....(1)$$

where $Al_2O_3$, $Na_2O$, $K_2O$, and $Li_2O$ in Relation (1) denote contents (mol%) of $Al_2O_3$, $Na_2O$, $K_2O$, and $Li_2O$. respectively. The value $Al_2O_3/(\text{sum of } Na_2O, K_2O, \text{ and } Li_2O)$ may be also referred to as an R ratio.

As described above, the glass article 100 manufactured using the glass composition in the embodiment may have characteristics and physical properties that make it applicable to a foldable display device. In an embodiment, the glass article 100 may have flexibility so that it may be folded and unfolded and may have strength and chemical properties sufficient to make it applicable as a cover window of the display device 500, for example.

A network structure formed by $SiO_2$ and $Al_2O_3$ included in the glass composition may become a flexible network structure by the addition of $Na_2O$, $Li_2O$, and $K_2O$. The addition of $Na_2O$, $Li_2O$, and $K_2O$ may cause Na ions, Li ions, or K ions to form ionic bonds with oxygen between bonds that form the network structure, e.g., bonds between $SiO_2$, thereby increasing non-bridging oxygen. The increase in non-bridging oxygen in the network structure means that the bonds of the network structure are broken or open. Thus, the network structure of glass may have flexibility. The glass composition may include $Na_2O$ in an amount of 5 mol% or more, $Li_2O$ in an amount of 5 mol% or more, and $K_2O$ in an amount greater than 0 mol%, so that the manufactured glass article 100 may have sufficient flexibility.

Since the glass composition includes a relatively excessive amount of $Na_2O$ and $Li_2O$, mechanical strength may be poor. To compensate for this, the glass composition may include $Al_2O_3$. Here, the ratio of the $Al_2O_3$ content to the sum of $Na_2O$ content, $Li_2O$ content, and $K_2O$ content may be adjusted within the range of 0.1 to 0.7 according to Relation (1) above. Accordingly, mechanical strength may be added to the network structure. In an embodiment, the ratio (also referred to as R ratio) of the $Al_2O_3$ content to the sum of $Na_2O$ content, $Li_2O$ content, and $K_2O$ content in the glass composition may be in the range of 0.1 to 0.7.

As the ratio (R ratio) of the $Al_2O_3$ content to the sum of $Na_2O$ content, $Li_2O$ content, and $K_2O$ content in the glass composition increases, $Al_2O_3$ may have a tetrahedron crystal structure formed by $SiO_2$. In the network structure formed by $SiO_2$, $SiO_2$ may have a tetrahedral crystal structure $[SiO_4]$, and when the contents of $Na_2O$, $Li_2O$, and $K_2O$ are increased compared to the contents of $Al_2O_3$, $Al_2O_3$ may also have a tetrahedral crystal structure $[AlO_4]$ and a mechanical strength may be improved. However, since the flexibility property is reduced as much as the mechanical strength is improved, in the illustrated embodiment, the contents of $Na_2O$, $Li_2O$, and $K_2O$ compared to the contents of $Al_2O_3$ may be formed at appropriate levels.

When the ratio (R ratio) of the $Al_2O_3$ content to the sum of $Na_2O$ content, $Li_2O$ content, and $K_2O$ content in the glass composition is 0.1 or more, the $Na_2O$ content, $Li_2O$ content, and $K_2O$ content may increase, and the increased $Na_2O$, $Li_2O$ content, and $K_2O$ may break the $SiO_2$ network structure, thereby increasing the distance between atoms in the network structure. Accordingly, a lot of extra space may be formed in the $SiO_2$ network structure, and thus shock absorption characteristics and flexibility may be improved.

In an embodiment, since the ratio (R ratio) of the $Al_2O_3$ content to the sum of $Na_2O$ content, $Li_2O$ content, and $K_2O$ content in the glass composition has a value of 0.1 to 0.7, the glass article 100 may have flexibility, sufficient strength against external impacts, and improved shock absorption characteristics.

In an embodiment, the glass composition may include 65.16 mol% of $SiO_2$, 8.86 mol% of $Al_2O_3$, 9.72 mol% of $Na_2O$, 3.2 mol% of $K_2O$, 10.08 mol% of $Li_2O$, and 2.99 mol% of MgO, and the R ratio according to Relation (1) above may be 0.385.

The glass composition may, when desired, include components such as $SnO_2$, $Y_2O_3$, $La_2O_3$, $Nb_2O_5$, $Ta_2O_5$ and $Gd_2O_3$ in addition to the components listed above. In addition, the glass composition may further include trace amounts of $Sb_2O_3$, $CeO_2$, and/or $As_2O_3$ as a refining agent.

The glass composition having the above composition may be molded into the shape of plate glass using various methods known in the art. Once molded into the plate glass shape, the glass composition may be further processed to produce the glass article 100 that may be applied to the display device 500. However, the invention is not limited thereto, and the glass composition may also not be molded into the plate glass shape but may be directly molded into the glass article 100 applicable to a product without an additional molding process.

A process in which the glass composition is molded into the flat glass shape and then processed into the glass article 100 will now be described.

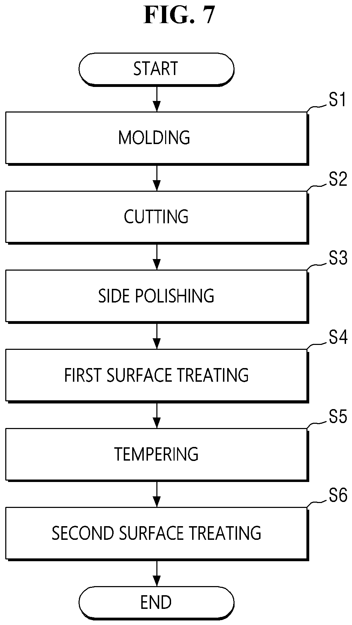

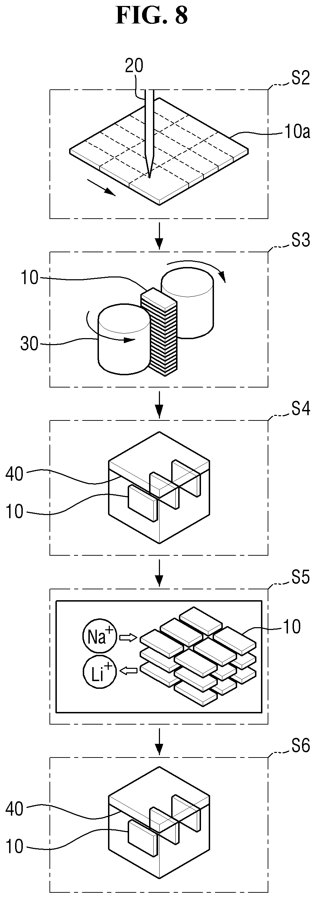

FIG. 7 is a flowchart illustrating an embodiment of operations in a process of manufacturing a glass article. FIG. 8 is a schematic diagram illustrating a series of operations from a cutting operation to a second surface treating operation of FIG. 7.

Referring to FIGS. 7 and 8, a method of manufacturing a glass article 100 may include a molding operation (operation S1), a cutting operation (operation S2), a side polishing operation (operation S3), a first surface treating operation (operation S4), a tempering operation (operation S5), and a second surface treating operation (operation S6).

The molding operation (operation S1) may include preparing a glass composition and molding the glass composition. The glass composition may have the above-described composition and components, which will not be described in detail here. The glass composition may be molded into a plate glass shape by a method such as a float process, a fusion draw process, or a slot draw process.

The glass molded into the flat plate shape may be cut through the cutting operation (operation S2). The glass molded into the flat plate shape may have a size different from the size applied to a final glass article 100. In an embodiment, glass may be molded in the state of a large-area substrate as a glass 10a of a mother substrate unit including a plurality of glass articles and then may be cut into a plurality of cells to produce a plurality of glass articles, for example. In an embodiment, although the final glass article 100 has a size of about 6 inches, glass may be molded to a size (e.g., 120 inches) several to hundreds of times the size of the final glass article 100 and then cut to produce 20 flat plate shapes at once, for example. This may improve process efficiency as compared with when individual glass articles are molded separately. In addition, even when glass corresponding to the size of one glass article is molded, when a final glass article has various planar shapes, a desired shape may be formed through the cutting process.

The cutting of the glass 10a of a mother substrate unit may be performed using a cutting knife 20, a cutting wheel, a laser, or the like.

The glass cutting operation (operation S2) may be performed before the glass tempering operation (operation S5). The glass 10a corresponding to a mother substrate may also be tempered and then cut into final glass article sizes. In this case, however, cut surfaces (e.g., side surfaces) of the glass may not be tempered. Therefore, it is desirable to perform the tempering operation (operation S5) after completing the cutting operation (operation S2).

A pre-tempering polishing operation may be performed between the glass cutting operation (operation S2) and the glass tempering operation (operation S5). The pre-tempering polishing operation may include the side polishing operation (operation S3) and the first surface treating operation (operation S4). In an embodiment, the side polishing operation (operation S3) may be performed before the first surface treating operation (operation S4), but this order may be reversed.

The side polishing operation (operation S3) is an operation of polishing side surfaces of the cut glass 10. In the side polishing operation (operation S3), the side surface of the glass 10 is polished to have a smooth surface. Further, each side surface of the glass 10 may have a uniform surface through the side polishing operation (operation S3). More specifically, the cut glass 10 may include one or more cut surfaces. In some cut glasses 10, two side surfaces of four side surfaces may be cut surfaces. In some other cut glasses 10, three side surfaces of four side surfaces may be cut surfaces. In some other cut glasses 10, all of four side surfaces may be cut surfaces. When the side surface is a cut surface, it may have different surface roughness from that of an uncut surface. In addition, even the cut surfaces may have different surface roughness. Therefore, by polishing each side surface through the side polishing operation (operation S3), each side surface may have uniform surface roughness or the like. Further, when there is a relatively small crack on the side surface, it may be removed through the side polishing operation (operation S3).

The side polishing operation (operation S3) may be performed simultaneously on a plurality of cut glasses 10. That is, in a state where the plurality of cut glasses 10 are stacked, the stacked glasses 10 may be polished at the same time.

The side polishing operation (operation S3) may be performed by a mechanical polishing method or a chemical mechanical polishing method using a polishing device 30. In an embodiment, two opposite side surfaces of the cut glasses 10 may be polished simultaneously, and then the other two opposite side surfaces may be polished simultaneously, but the invention is not limited thereto.

The first surface treating operation (operation S4) may heal the glasses 10. In the first surface treating operation (operation S4), the reduced strength of the glass surface may be improved by first surface treating the cut glass 10. The first surface treating operation (operation S4) may be performed by accommodating the glasses 10 in a cassette and immersing the glasses 10 in a healing solution 40. The healing solution 40 may be a solution including or consisting of fluorine ions. In an embodiment, the healing solution 40 may include or consist of at least one of hydrofluoric acid, sulfuric acid, hydrochloric acid, or ammonium fluoride, for example.

In the first surface treating operation (operation S4), the entirety of the surface of the glass 10 may be etched by the healing solution 40. Etching of the glass 10 may be performed at an etching rate of 1 micrometer per minute ($\mu$m/min) to 1.4 $\mu$m/min, and may be performed with an etching thickness of the glass 10 in a range of 0.8 $\mu$m to 1.2 $\mu$m from the surface of the glass 10. The etching rate may be controlled by adjusting the concentration of the healing solution 40. The surface of the glass 10 may affect impact resistance properties in a state of having fine cracks. In the illustrated embodiment, it is possible to improve the impact resistance properties of the glass 10 by removing fine cracks of the glass 10 through etching.

Subsequently, the glass 10 is strengthened (operation S5). The glass tempering operation (operation S5) may be performed one or more times. In the following, performing the glass tempering operation (operation S5) three times is described as an example of, but the invention is not limited thereto, and the glass tempering operation (operation S5) may be performed once or twice.

The first tempering operation includes a first ion exchange process in which the glass 10 is immersed in a first molten salt. The first molten salt may include or consist of sodium nitrate ($NaNO_3$) and potassium nitrate ($KNO_3$), the concentration of sodium (Na) ions in the cations in the molten salt may be 75 mol% to 25 mol%, and the concentration of potassium (K) ions may be 25 mol% to 75 mol%. The first ion exchange process may be performed for about 90 minutes to about 240 minutes at a temperature of approximately 385 degrees Celsius (°C) to 405 °C.

In the first ion exchange process, lithium (Li) ions on the glass surface may be exchanged for sodium (Na) ions. When glass including or consisting of lithium (Li) ions is exposed to sodium (Na) ions by a method such as immersing glass including or consisting of lithium (Li) ions in a molten salt tempering tank including or consisting of sodium nitrate ($NaNO_3$), lithium (Li) ions of the glass surface are discharged to the outside and sodium (Na) ions may replace them. Since the exchanged sodium (Na) ions have a larger ionic radius than lithium (Li) ions, compressive stress may be generated. As the amount of exchanged sodium (Na) ions increases, compressive stress may increase. As the first ion exchange process progresses, lithium (Li) ions may be eluted from the inside of the glass, and the sodium (Na) ion content in the mixed molten salt may generally decrease.

The second tempering operation includes a second ion exchange process in which the glass 10 that has undergone the first tempering operation is immersed in a second molten salt. The second molten salt may include or consist of sodium nitrate ($NaNO_3$) and potassium nitrate ($KNO_3$), the content of sodium (Na) ions in the cations in the molten salt may be 5 mol% to 10 mol%, and the content of potassium (K) ions may be 90 mol% to 95 mol%. The second ion exchange process may be performed for about 30 minutes to about 120 minutes at a temperature of approximately 370 °C to 390 °C.

When the glass 10 including or consisting of sodium (Na) ions is exposed to potassium (K) ions by immersing it in a mixed molten salt bath including or consisting of potassium nitrate ($KNO_3$) and sodium nitrate ($NaNO_3$), sodium (Na) ions in the glass are discharged to the outside and the potassium (K) ions may replace them. Since the exchanged potassium (K) ions have a larger ionic radius than the sodium (Na) ions, it may generate compressive stress. The greater the amount of potassium (K) ions exchanged, the greater the compressive stress.

The third tempering operation includes a third ion exchange process in which the glass that has undergone the second tempering operation is immersed in a third molten salt. The third molten salt includes potassium nitrate ($KNO_3$), and the concentration of potassium (K) ions in the cations in the molten salt may be 99.5 mol% to 100 mol%. The third ion exchange process may be performed for about 5 minutes to about 10 minutes at a temperature of approximately 370 °C to 390 °C.

Sodium (Na) ions inside the glass that are not exchanged in the ion exchange process of the second tempering operation may be exchanged for potassium (K) ions. The ion exchange process may be performed on the surface of the glass.

After the tempering operation (operation S5), the second surface treating operation (operation S6) may be performed. In the second surface treating operation (S6), the reduced strength of the glass surface may be improved by performing a second surface treatment on the glass 10, similarly to the first surface treating operation (operation S4) described above. The second surface treating operation (operation S6) may be performed by accommodating the glasses 10 in the cassette and immersing the glass 10 in the healing solution 40. The healing solution 40 may be a solution including or consisting of fluorine ions. In an embodiment, the healing solution 40 may include or consist of at least one of hydrofluoric acid, sulfuric acid, hydrochloric acid, or ammonium fluoride, for example.

In the second surface treating operation (operation S6), the entirety of the surface of the glass 10 may be etched by the healing solution 40. Etching of the glass 10 may be performed at an etching rate of 1 $\mu$m/min to 1.4 $\mu$m/min, and may be performed with an etching thickness of the glass 10 in a range of 0.2 $\mu$m to 0.8 $\mu$m from the surface of the glass 10. In the second surface treating operation (operation S6), it is possible to improve the impact resistance properties of the glass 10 by removing fine cracks of the glass 10 through etching. In the illustrated embodiment, the glass 10 may have a surface roughness through the first surface treating operation (operation S4) and the second surface treating operation (operation S6). The surface roughness of the glass 10 may range from 0.2 nm to 0.45 nm, preferably from 0.2 nm to 0.4 nm.

Although not illustrated in the drawing, a shape machining process may be further performed as desired after the second surface treating operation (operation S6). In an embodiment, when the 3D glass articles 101 through 103 illustrated in FIG. 1 are to be manufactured, a 3D machining process may be performed after the second surface treating operation (operation S6) is completed, for example.

The glass article 100 manufactured through the above processes may have a component ratio similar to the component ratio of the glass composition. In an embodiment, the glass article 100 may include 60 mol% to 70 mol% of $SiO_2$, 5 mol% to 15 mol% of $Al_2O_3$, 5 mol% to 15 mol% of $Na_2O$, greater than 0 mol% to 5 mol% of $K_2O$, 5 mol% to 15 mol% of $Li_2O$, and greater than 0 mol% to 5 mol% of MgO, for example. The glass composition for manufacturing the glass article 100 may satisfy Relation (1) below.

$$0.1 \leq Al_2O_3/(\text{sum of } Na_2O, K_2O, \text{ and } Li_2O) \leq 0.7 \dots \quad (1)$$

where Al2O3, $Na_2O$, $K_2O$, and $Li_2O$ are contents (mol%) of the components.

In an embodiment, the glass article 100 made from the glass composition described above may have a thickness of 100 $\mu$m or less, preferably, 20 $\mu$m to 100 $\mu$m and may satisfy the following physical properties.

    i) Coefficient of thermal expansion ($10^{-7}$ per kelvin ($K^{-1}$)): $90*10^{-7}$ $K^{-1}$ to $100*10^{-7}$ $K^{-1}$
    ii) Glass transition temperature (Tg): 425 degrees Celsius (°C) to 525 °C
    iii) Density: 2.38 grams per cubic centimeter ($g/cm^3$) to 2.48 $g/cm^3$
    iv) Modulus of elasticity: 72 gigapascals (GPa) to 82 GPa
    v) Poisson ratio: 0.20 to 0.22
    vi) Hardness: 5.50 GPa to 6.50 GPa
    vii) Fracture toughness: 0.75 megapascal square root meter ($MPa*m^{0.5}$) to 0.85 $MPa*m^{0.5}$
    viii) Brittleness: 7.0 $\mu m^{-0.5}$ to 8.0 $\mu m^{-0.5}$
    ix) Surface roughness: 0.2 nm to 0.4 nm

Hereinafter, embodiments will be described in more detail by way of a manufacturing example and an experimental example.

Manufacturing Example 1:

A glass composition comprising 65.15 mol% of $SiO_2$, 8.86 mol% of $Al_2O_3$, 9.72 mol% of $Na_2O$, 3.20 mol% of $K_2O$, 10.08 mol% of $Li_2O$, and 2.99 mol% of MgO was prepared.

Comparative Example 1:

The glass composition was molded, cut, side polished and tempered to form a glass article. Here, the first and second surface treatments were not performed.

Embodiment 1:

A glass article was manufactured by performing molding, cutting, side polishing, first surface treatment, tempering, and second surface treatment using the glass composition. Here, the first surface treatment and the second surface treatment are performed at an etching rate of 0.29 $\mu$m/min by immersing the glasses in the healing solution including or consisting of hydrofluoric acid ("HF"), sulfuric acid ($H_2SO_4$) and ammonium fluoride ($NH_4F$) at a temperature of 30 degrees. At this time, the total etching thickness of the glass article etched in the first surface treatment and the second surface treatment was 1 $\mu$m.

Embodiment 2:

A glass article was manufactured under the same conditions as in Embodiment 1 except that the first surface treatment and the second surface treatment were performed at an etching rate of 0.65 $\mu$m/min.

Embodiment 3:

A glass article was manufactured under the same conditions as in Embodiment 1 except that the first surface treatment and the second surface treatment were performed at an etching rate of 1.26 $\mu$m/min.

Embodiment 4:

A glass article was manufactured under the same conditions as in Embodiment 1 except that the first surface treatment and the second surface treatment were performed at an etching rate of 0.43 $\mu$m/min by immersing the glass into the healing solution including or consisting of hydrofluoric acid (HF), hydrochloric acid (HCl) and ammonium fluoride ($NH_4F$).

Embodiment 5:

A glass article was manufactured under the same conditions as in Embodiment 4 except that the first surface treatment and the second surface treatment were performed at an etching rate of 0.74 $\mu$m/min.

Embodiment 6:

A glass article was manufactured under the same conditions as in Embodiment 4 except that the first surface treatment and the second surface treatment were performed at an etching rate of 1.37 $\mu$m/min.

Experimental Example 1:

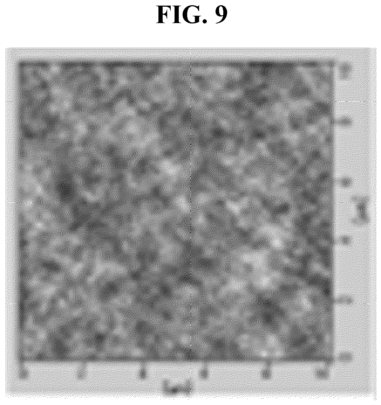

The glass articles manufactured according to Comparative Example 1 and Embodiments 1, 2, 3, 4, 5 and 6 were prepared as specimens of 50 mm*50 mm and the surface roughness was measured, and the results are shown in FIGS. 9 to 15, respectively as well as shown in Table 1 below.
For the surface roughness of the glass article, the Nano Navi II S-image model of SII Nano Technology Co., Ltd. was used. (The measurement mode is DFM and the measurement range is 10 $\mu$m * 10 $\mu$m.)

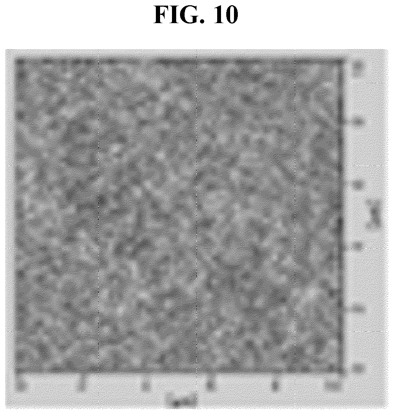

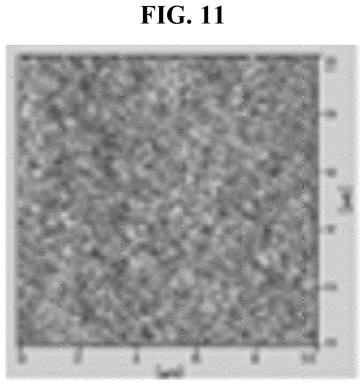

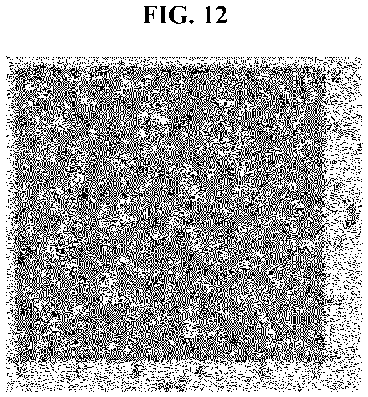

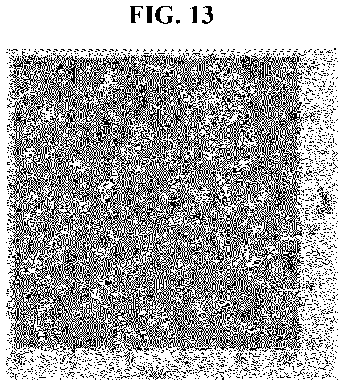

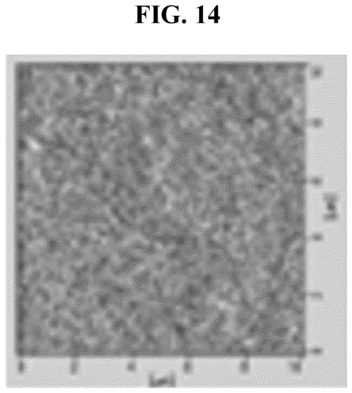

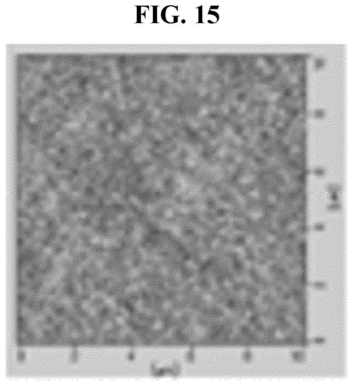

FIG. 9 is a surface image of a glass article manufactured according to Comparative Example 1. FIG. 10 is a surface image of a glass article manufactured according to Embodiment 1. FIG. 11 is a surface image of a glass article manufactured according to Embodiment 2. FIG. 12 is a surface image of a glass article manufactured according to Embodiment 3. FIG. 13 is a surface image of a glass article manufactured according to Embodiment 4. FIG. 14 is a surface image of a glass article manufactured according to Embodiment 5. FIG. 15 is a surface image of a glass article manufactured according to Embodiment 6.

[TABLE 1]

|  | Surface roughness (nm) |
| --- | --- |
| Comparative example 1 | 0.14 |
| Embodiment 1 | 0.44 |
| Embodiment 2 | 0.41 |
| Embodiment 3 | 0.40 |
| Embodiment 4 | 0.39 |
| Embodiment 5 | 0.35 |
| Embodiment 6 | 0.38 |

Referring to FIGS. 9 to 15 and Table 1, the glass article according to Comparative Example 1 that has not been including or consisting of the surface treatment operations showed the surface roughness of 0.14 nm, and the glass articles according to Embodiments 1 to 6 which have been including or consisting of the surface treatment operations showed the surface roughness of approximately 0.35 nm to 0.44 nm.

Experimental Example 2:

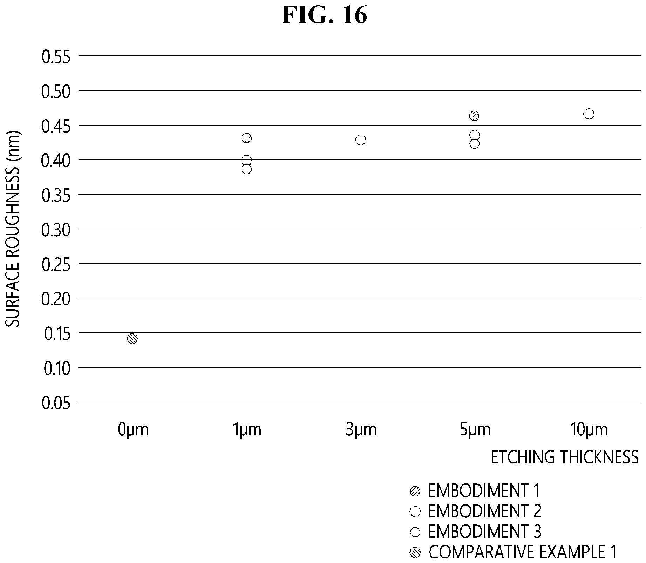

In Embodiments 1, 2 and 3, glass articles were manufactured by varying the total etching thickness of the first and second surface treatments to 3 $\mu$m, 5 $\mu$m, and 10 $\mu$m. The results together with Comparative Example 1 are shown in FIG. 16.
FIG. 16 is a graph showing surface roughness according to etching thickness of glass articles manufactured according to Comparative Example 1 and Embodiment 1, 2, and 3.
Referring to FIG. 16, even when the etching thickness of the first and second surface treatments increased, the surface roughness of the glass articles according to Embodiments 1 to 3 was found to be within the range of about 0.35 nm to about 0.50 nm.

Experimental Example 3:

The glass articles were manufactured by performing molding, cutting, side polishing, first surface treatment, tempering, and second surface treatment using the glass composition. Here, the first surface treatment and the second surface treatment are performed by immersing the glasses in the healing solution including or consisting of hydrofluoric acid (HF), sulfuric acid ($H_2SO_4$) and ammonium fluoride ($NH_4F$) at a temperature of about 30 degrees. In addition, the first surface treatment was performed differently with total etching thicknesses of 0.5 $\mu$m, 1.0 $\mu$m, 1.5 $\mu$m, and 2.0 $\mu$m at etching rates of 0.4 $\mu$m/min, 0.8 $\mu$m/min, and 1.2 $\mu$m/min, respectively. The second surface treatment was performed equally with a total etching thickness of 0.5 $\mu$m at an etching rate of 1.2 $\mu$m/min.

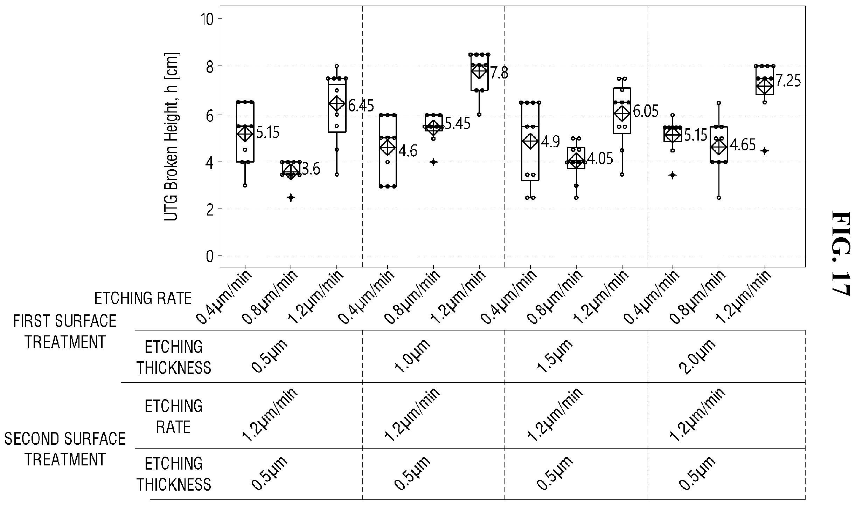

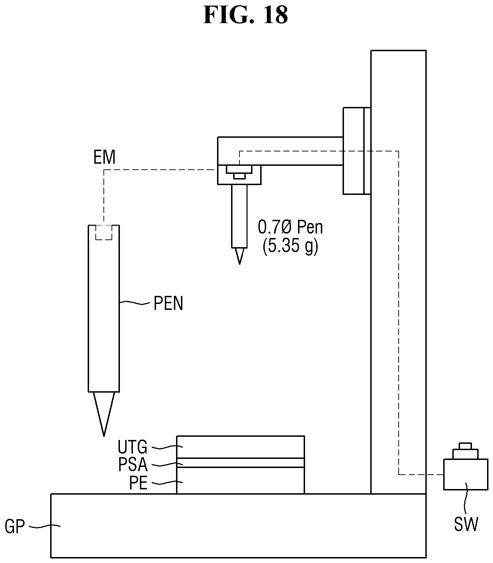

A pen drop test ("PDT") was performed on the glass articles according to Experimental Example 3, and the results are shown in FIG. 17. FIG. 17 is a graph showing PDT result of a glass article according to Experimental Example 3. FIG. 18 schematically illustrates a PDT device.

Referring to FIG. 18, in the PDT, a glass article UTG is attached to a polyethylene film PE through a pressure sensitive adhesive PSA and then fixed on a granite plate GP. After fixing a pen PEN to the device through an electromagnet EM, a switch SW was operated to drop the pen PEN onto the glass article UTG. The pen PEN has a diameter of 0.7$\pi$ and a weight of 5.35g and the drop height of the pen was repeatedly changed by 0.1 cm within the range of 0.5 to 10 cm. The height was measured when breakage finally occurred while the pen was repeatedly dropped.

Referring to FIG. 17, it was confirmed that as the etching rate and etching thickness of the first surface treatment increase, the height at which cracks occur in the glass article generally increases.

Experimental Example 4:

According to Table 2 below, the glass articles according to Comparative Example 2 and Embodiment 7 were prepared, and a glass article manufacturing process was performed. In the Embodiment 1 described above, the first surface treatment was performed at an etching rate of 1.2 $\mu$m/min and an etching thickness of 1.0 $\mu$m, and the second surface treatment was performed at an etching rate of 1.2 $\mu$m/min and an etching thickness of 0.5 $\mu$m in the glass article manufacturing process.

The composition of the glass articles according to Comparative Example 2 and Embodiment 7 are shown in Table 2 below. In addition, the density, glass transition temperature, hardness, fracture toughness, brittleness, elastic modulus, thermal expansion coefficient, and Poisson ratio of the glass articles according to Comparative Example 2 and Embodiment 7 were measured and shown in Table 3 below.

Here, the glass transition temperature Tg was checked using differential thermal analysis ("DTA") equipment by preparing 5 grams (g) of each composition and raising the temperature at a rate of 10 kelvin per minute (K/min) to the glass transition temperature range. The thermal expansion coefficient was checked using a thermo-mechanical analyzer ("TMA") by preparing a specimen with a size of 10$\times$10$\times$13 millimeter (mm$^3$) for each composition and raising the temperature at a rate of 10 K/min to the glass transition temperature range.

The elastic modulus and the Poisson ratio were checked using an elastic modulus tester by preparing a specimen with a size of 10$\times$20$\times$3 cubic millimeters (mm$^3$) for each composition and checking the stress and strain of the specimen.

The hardness and the fracture toughness were calculated using Equations (3) and (4) below by applying a load of 4.9 newton (N) for 30 seconds with a Vickers hardness tester using a 19 $\mu$m size diamond tip.

$$H_V = 1.854 \cdot \frac{F}{a^2} \qquad (3)$$

where Hv is Vickers hardness, F is a load, and a is an indentation length.

$$\frac{K_{IC} \cdot \phi}{H_V \cdot a^{\frac{1}{2}}} = 0.15 \cdot K \cdot \left(\frac{c}{a}\right)^{-\frac{3}{2}} \qquad (4)$$

where $K_{IC}$ is fracture toughness, $\phi$ is constraint value ($\phi \approx 3$), Hv is Vickers hardness, K is a constant (3.2), $a$ is an indentation length, and c is a crack length.

The brittleness was calculated using Equation (5) below by applying a load of 4.9 N for 30 seconds using a Vickers hardness tester.

$$B = \gamma \, P^{-1/4} \frac{C^{3/2}}{a} \qquad (5)$$

where $B$ is brittleness, $\gamma$ is a constant (2.39 N$^{1/4}$/$\mu$m$^{1/2}$), $P$ is an indentation load, $a$ is an indentation length, and C is a crack length

[TABLE 2]

| Sample group | | Comparative Example 2 | Embodiment 7 |
|---|---|---|---|
| Composition | $SiO_2$ | 67.18 | 65.15 |
| | $Al_2O_3$ | 11.27 | 8.86 |
| | $Na_2O$ | 14.77 | 9.72 |
| | $K_2O$ | 1.47 | 3.20 |
| | CaO | 0.10 | - |
| | MgO | 4.62 | 2.99 |
| | $B_2O_3$ | 0.36 | - |
| | $SnO_2$ | 0.22 | - |
| | $Li_2O$ | - | 10.08 |
| | $ZrO_2$ | 0.01 | - |
| Composition ratio (mol%) $Al_2O_3:R_2O$ | | 11.27:16.6 | 8.86:23 |
| Composition ratio (mol%) $Al_2O_3/R_2O$ | | 0.678 | 0.385 |

[TABLE 3]

| Physical properties | Comparative Example 2 | Embodiment 7 |
|---|---|---|
| Thermal expansion coefficient ($10^{-7}$ $K^{-1}$) | 91 | 96 |
| Glass transition temperature Tg(°C) | 605 | 475 |
| Density (g/cm$^3$) | 2.45 | 2.43 |
| Elastic modulus (GPa) | 70 | 77 |
| Poisson ratio | 0.2 | 0.210 |
| Hardness (GPa) | 5.90 | 5.98 |
| Fracture toughness (MPa*m$^{0.5}$) | 0.68 | 0.80 |
| Brittleness($\mu$m$^{-0.5}$) | - | 7.48 |

Referring to Tables 2 and 3 above, it may be seen that Embodiment 7 has a higher elastic modulus compared to Comparative Example 2. Elastic modulus may mean excellent flexibility.

In addition, it may be seen that that Embodiment 7 has a higher fracture toughness compared to Comparative Example 2. Fracture toughness may mean excellent impact resistance properties.

Experimental Example 5:

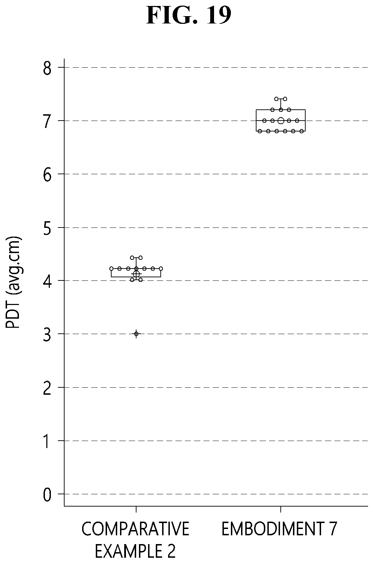

A PDT was performed on the glass articles according to Comparative Example 2 and Embodiment 7, and the results are shown in FIG. 19.

FIG. 19 is a graph showing PDT result of a glass article according to Comparative Example 2 and Embodiment 7.

Referring to FIG. 19, the glass article according to Comparative Example 2 broke at approximately 4 cm, but the glass article according to Embodiment 7 broke at approximately 7 cm, indicating that the glass article was broken at a higher height.

Accordingly, it may be seen that the glass article according to Embodiment 7 has excellent impact resistance.

In concluding the detailed description, those skilled in the art will appreciate that many variations and modifications may be made to the preferred embodiments without substantially departing from the principles of the invention. Therefore, the disclosed preferred embodiments of the invention are used in a generic and descriptive sense only and not for purposes of limitation.

**Claims**

1. A glass composition comprising 60 mol% to 70 mol% of $SiO_2$, 5 mol% to 15 mol% of $Al_2O_3$, 5 mol% to 15 mol% of $Na_2O$, greater than 0 mol% and equal to or less than 5 mol% of $K_2O$, 5 mol% to 15 mol% of $Li_2O$, and greater than 0 mol% and equal to or less than 5 mol% of MgO based on a total weight, and satisfying Relation (1) below:

$$0.1 \leq Al_2O_3/(\text{sum of } Na_2O,\ K_2O,\ \text{and } Li_2O) \leq 0.7 \dots\ (1),$$

where $Al_2O_3$, $Na_2O$, $K_2O$, and $Li_2O$ in the Relation (1) denote contents in mol% of $Al_2O_3$, $Na_2O$, $K_2O$, and $Li_2O$, respectively, in the glass composition.

2. A glass article (100, 101, 102, 103) comprising:

   a glass composition according to claim 1,
   wherein the glass article (100, 101, 102, 103) has a thickness of 100 $\mu$m or less.

3. The glass article (100, 101, 102, 103) of claim 2,
   wherein a thickness of the glass article (100, 101, 102, 103) is in a range of 20 $\mu$m to 100 $\mu$m.

4. The glass article (100, 101, 102, 103) of claim 2 or 3,
   wherein a thermal expansion coefficient of the glass article (100, 101, 102, 103) is in a range of $90*10^{-7}\ K^{-1}$ to $100*10^{-7}\ K^{-1}$.

5. The glass article (100, 101, 102, 103) of at least one of claims 1 to 4,
   wherein a glass transition temperature of the glass article (100, 101, 102, 103) is in a range of 425 °C to 525 °C.

6. The glass article (100, 101, 102, 103) of at least one of claims 1 to 5,
   wherein a density of the glass article (100, 101, 102, 103) is in a range of 2.38 $g/cm^3$ to 2.48 $g/cm^3$.

7. The glass article (100, 101, 102, 103) of at least one of claims 1 to 6,
   wherein an elastic modulus of the glass article (100, 101, 102, 103) is in a range of 72 GPa to 82 Gpa.

8. The glass article (100, 101, 102, 103) of at least one of claims 1 to 7,
   wherein a Poisson ratio of the glass article (100, 101, 102, 103) is in a range of 0.20 to 0.22.

9. The glass article (100, 101, 102, 103) of at least one of claims 1 to 8,
   wherein a hardness of the glass article (100, 101, 102, 103) is in a range of 5.50 Gpa to 6.50 Gpa.

10. The glass article (100, 101, 102, 103) of at least one of claims 1 to 9,
    Wherein a fracture toughness of the glass article (100, 101, 102, 103) is in a range of 0.75 $MPa*m^{0.5}$ to 0.85 $MPa*m^{0.5}$.

11. The glass article (100, 101, 102, 103) of at least one of claims 1 to 10,
    wherein a brittleness of the glass article (100, 101, 102, 103) is in a range of 7.0 $\mu m^{-0.5}$ to 8.0 $\mu m^{-0.5}$.

12. The glass article (100, 101, 102, 103) of at least one of claims 1 to 11,
    wherein a surface roughness is in a range of 0.2 nm to 0.45 nm.

13. The glass article (100, 101, 102, 103) of at least one of claims 1 to 12, wherein the glass article is a foldable glass article.

14. A display device (500) comprising:

    a display panel (200) comprising a plurality of pixels (PX);
    a cover window disposed on the display panel (200); and
    an optically clear bonding layer (300) disposed between the display panel (200) and the cover window,
    wherein the cover window is a glass article (100, 101, 102, 103) according to at least one of claims 2 to 13

**15.** The display device (500) of claim 14,
wherein the display device (500) is a foldable display device (500).

**16.** A method of manufacturing a glass article (100, 101, 102, 103), especially a glass article (100, 101, 102, 103) according to at least one of claims 2 to 13, the method comprising:

forming a glass composition according to claim 1 into a glass having a plate shape;
cutting the glass;
first surface treating the glass;
tempering the glass; and
second surface treating the glass,

**17.** The method of claim 16,
wherein the first surface treating is to etch the surface of the glass at an etching rate of 1 $\mu$m/min to 1.4 $\mu$m/min.

**18.** The method of claim 16 or 17,
wherein the first surface treating is to etch the surface of the glass by a thickness of 0.8 $\mu$m to 1.2 $\mu$m.

**19.** The method of at least one of claims 16 to 18,
wherein the second surface treating is to etch the surface of the glass at an etching rate of 1 $\mu$m/min to 1.4 $\mu$m/min.

**20.** The method of at least one of claims 16 to 19,
wherein the second surface treating is to etch the surface of the glass by a thickness of 0.2 $\mu$m to 0.8 $\mu$m.

# FIG. 1

# FIG. 2

# FIG. 3

# FIG. 4

500

| PX | PX | PX | PX | · | · | · | · | · | · | PX |  |

—100
—300
—200

# FIG. 5

100

US     CSR1

CTR

t

RS     CSR2

# FIG. 6

# FIG. 7

```
        ╭──────────────╮
        │    START     │
        ╰──────┬───────╯
               │                    S1
        ┌──────▼───────┐
        │   MOLDING    │
        └──────┬───────┘
               │                    S2
        ┌──────▼───────┐
        │   CUTTING    │
        └──────┬───────┘
               │                    S3
        ┌──────▼───────┐
        │ SIDE POLISHING│
        └──────┬───────┘
               │                    S4
        ┌──────▼───────┐
        │FIRST SURFACE │
        │  TREATING    │
        └──────┬───────┘
               │                    S5
        ┌──────▼───────┐
        │  TEMPERING   │
        └──────┬───────┘
               │                    S6
        ┌──────▼───────┐
        │SECOND SURFACE│
        │  TREATING    │
        └──────┬───────┘
               │
        ╭──────▼───────╮
        │     END      │
        ╰──────────────╯
```

# FIG. 8

FIG. 9

FIG. 10

# FIG. 11

**FIG. 12**

FIG. 13

## FIG. 14

**FIG. 15**

## FIG. 16

# FIG. 17

# FIG. 18

EM

0.7Ø Pen
(5.35 g)

PEN

UTG
PSA
PE

GP

SW

# FIG. 19

Europäisches Patentamt

European Patent Office

Office européen des brevets

**EUROPEAN SEARCH REPORT**

Application Number

EP 24 18 3375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/134025 A1 (HART SHANDON DEE [US]) 31 May 2012 (2012-05-31) | 1-16 | INV. C03C3/085 |
| Y | * paragraphs [0053], [0060] - [0062], [0065], [0130]; claims; example 9; table 1 * | 17-20 | C03C15/02 C03C21/00 |
| X | WO 2017/120424 A1 (CORNING INC [US]) 13 July 2017 (2017-07-13) * paragraphs [0097], [0101]; claims; figures 5A,5B; examples; table 2 * | 1,4-16 | |
| X | JP 2006 228431 A (NIPPON SHEET GLASS CO LTD; HOYA CORP) 31 August 2006 (2006-08-31) * paragraphs [0038], [0041], [0043], [0052] - [0055], [0057]; claims; examples 1-4,7,10,11,14-17,19,20,22-24,26-31; tables 1-4 * | 1,4-13, 16 | |
| Y | CN 113 582 553 B (WUHU TOKEN SCIENCES CO LTD) 28 March 2023 (2023-03-28) * paragraphs [0037] - [0039]; claims * | 17-20 | TECHNICAL FIELDS SEARCHED (IPC) |
| A | US 2021/269356 A1 (KANG BYUNG HOON [KR] ET AL) 2 September 2021 (2021-09-02) * paragraphs [0142] - [0153]; claims * | 16-20 | C03C |

The present search report has been drawn up for all claims

| Place of search | Date of completion of the search | Examiner |
|---|---|---|
| Munich | 24 October 2024 | Zandonà, Alessio |

EPO FORM 1503 03.82 (P04C01)

## ANNEX TO THE EUROPEAN SEARCH REPORT
## ON EUROPEAN PATENT APPLICATION NO.

EP 24 18 3375

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | | | Publication date | Patent family member(s) | | | Publication date |
|---|---|---|---|---|---|---|---|
| US 2012134025 | A1 | | 31-05-2012 | CN | 103328398 | A | 25-09-2013 |
| | | | | EP | 2646383 | A1 | 09-10-2013 |
| | | | | JP | 2013544226 | A | 12-12-2013 |
| | | | | KR | 20130135879 | A | 11-12-2013 |
| | | | | TW | 201228953 | A | 16-07-2012 |
| | | | | US | 2012134025 | A1 | 31-05-2012 |
| | | | | WO | 2012074943 | A1 | 07-06-2012 |
| WO 2017120424 | A1 | | 13-07-2017 | CN | 108463439 | A | 28-08-2018 |
| | | | | CN | 114956551 | A | 30-08-2022 |
| | | | | EP | 3400202 | A1 | 14-11-2018 |
| | | | | JP | 7165055 | B2 | 02-11-2022 |
| | | | | JP | 2019509238 | A | 04-04-2019 |
| | | | | JP | 2023002719 | A | 10-01-2023 |
| | | | | KR | 20180101429 | A | 12-09-2018 |
| | | | | TW | 201736300 | A | 16-10-2017 |
| | | | | TW | 202140403 | A | 01-11-2021 |
| | | | | TW | 202244021 | A | 16-11-2022 |
| | | | | US | 2017197869 | A1 | 13-07-2017 |
| | | | | US | 2019084870 | A1 | 21-03-2019 |
| | | | | US | 2022064052 | A1 | 03-03-2022 |
| | | | | US | 2023278910 | A1 | 07-09-2023 |
| | | | | US | 2024279108 | A1 | 22-08-2024 |
| | | | | WO | 2017120424 | A1 | 13-07-2017 |
| JP 2006228431 | A | | 31-08-2006 | NONE | | | |
| CN 113582553 | B | | 28-03-2023 | NONE | | | |
| US 2021269356 | A1 | | 02-09-2021 | CN | 113307508 | A | 27-08-2021 |
| | | | | KR | 20210109695 | A | 07-09-2021 |
| | | | | US | 2021269356 | A1 | 02-09-2021 |
| | | | | US | 2024270637 | A1 | 15-08-2024 |

EPO FORM P0459

For more details about this annex : see Official Journal of the European Patent Office, No. 12/82